# FASCICULE DE BREVET EUROPEEN

(11) **EP 4 182 806 B1**
(45) Date de publication et mention de la délivrance du brevet: **27.08.2025**
(21) Numéro de dépôt: 21737333.1
(22) Date de dépôt: 08.07.2021
(51) Int. Cl.: G06F 16/22

(54) **TRAITER DES REQUETES DE MISES A JOUR OU D´INSERTION DE DONNEES**
VERARBEITUNG VON DATENÄNDERUNGEN ODER DATENEINFÜGEN REQUESTS
HANDLING DATA UPDATE OR INSERTION REQUESTS

(30) Priorité: 15.07.2020 FR 2007424
(43) Date de publication de la demande: 24.05.2023
(73) Titulaire: Banks and Acquirers International Holding, 92150 Suresnes (FR)
(72) Inventeur: GERAUD, Rémi, 26000 VALENCE (FR); KOUDOUSSI, Hiba, 75012 PARIS (FR); NACCACHE, David, 75016 PARIS (FR)
(74) Mandataire: Germain Maureau
(86) Numéro de dépôt international: PCT/EP2021/069067
(87) Numéro de publication internationale: WO 2022/013071

(56) Documents cités:
- US-A1- 2015 213 071
- ANONYMOUS: "MySQL :: MySQL 8.0 Reference Manual :: A.5 MySQL 8.0 FAQ: Triggers", 1 May 2020 (2020-05-01), pages 1 - 4, XP055789704, Retrieved from the Internet <URL:http://web.archive.org/web/20200501082017/https://dev.mysql.com/doc/refman/8.0/en/faqs-triggers.html> [retrieved on 20210324]

## Description

### 1. Domaine

L'invention se rapporte à l'optimisation de code, issu d'une requête transactionnelle, au sein d'un système de base de données gérant une pluralité d'unité de comptage. Plus particulièrement, l'invention porte sur l'optimisation de l'exécution de la requête transactionnelle initiale, selon un plan d'optimisation qui tient compte de valeurs contenues dans le système de base de données, en fonction de valeurs de champs associés à des enregistrements de la base de données.

### 2. Art Antérieur

Les systèmes informatisés ont modifié de nombreux aspects de la vie moderne. Les systèmes informatisés sont de plus en plus utilisés, en autonomie, dans pour effectuer des tâches de gestion, d'harmonisation ou de répartition. C'est par exemple le cas de systèmes informatisés liés à la robotique, qui peuvent être appelés mécatroniques. De tels systèmes sont par exemple en mesure de prendre, sans intervention d'utilisateur, des décisions d'exécution d'actions, qui sont fonction de l'environnement dans lequel le système mécatronique se trouve.

De plus en plus, les décisions sont laissées à l'appréciation d'un processeur de traitement automatisé, de type neuronal, lequel va effectuer les actions requises en fonctions de situations antérieurement apprises. Ainsi, à partir d'une requête initiale provenant d'un serveur ou d'un utilisateur, le processeur de traitement automatisé va effectuer les actions résultant d'une décision, elle-même résultant d'un passage d'un certain nombre de paramètres d'entrée dans un ou plusieurs réseaux de neurones.

Ce mode de traitement de données entrantes, notamment en mécatronique, mais également en automatisme est intéressant dans certaines situations. Par exemple lorsque les paramètres d'entrées varient dans des amplitudes connues, répertoriées et antérieurement apprises, des systèmes basés sur l'apprentissage automatique peuvent effectivement être opérationnels sans nécessiter d'intervention humaine. En revanche, lorsque les valeurs d'entrées varient fortement, voire lorsque de nouvelles valeurs d'entrées, correspondants à des types non existants, surviennent, les intelligences artificielles nécessitent alors une assistance humaine qui rend leur utilisation plus complexe ou moins intéressantes. US 2015/213071 A1 (ALVEY WALTER D [US] ET AL) 30 juillet 2015, décrit une méthode et un système visant à améliorer les performances des bases de données en colonnes en tamponnant les insertions de lignes : lorsqu'une nouvelle ligne est insérée, elle est découpée en tuplets correspondant aux groupes de colonnes, lesquels sont copiés dans des buffers dédiés. L'insertion effective dans la table est différée jusqu'à ce qu'un événement déclencheur (comme un buffer plein) survienne, déclenchant alors le vidage (flush) des buffers vers le stockage permanent.

Il existe donc un besoin de rendre le traitement de données, notamment pour les systèmes de traitement automatique plus simple à mettre en œuvre, en permettant une scalabilité à la donnée plus fort que les mécanismes existants.

### 3. Résumé de l'invention

La méthode proposée par les inventeurs ne pose pas ces problèmes de l'art antérieur. En effet, il est proposé une méthode de distribution et de répartition de mises à jour de base de données sur la base d'un identifiant d'enregistrement et d'une mise en œuvre d'un marquage opérationnel.

Plus particulièrement, il est proposé un procédé de traitement de requêtes d'insertion et/ou de modifications de données, procédé mis en œuvre par une dispositif électronique de traitement, comprenant une interface de communication destinée à recevoir lesdites requêtes en provenance d'un réseau de communication. Un tel procédé comprend une phase de distribution de données, au sein d'une pluralité de buffers, chaque buffer étant associé à un enregistrement d'une base de données, l'association étant effectuée par l'intermédiaire d'un identifiant d'enregistrement de base de données présent au sein des requêtes d'insertion et/ou de modification reçues, lesdites données étant insérées sous la forme d'enregistrements de buffer, comprenant une valeur à mettre à jour et/ou insérer au sein de la base de données ; et une phase de répartition, à partir des buffers de ladite pluralité de buffers, de données au sein des enregistrements de la base de données, ladite phase de répartition comprenant, pour les enregistrements de buffers qui comprennent un marquage opérationnel, l'exécution à partir d'un fichier de configuration, d'un programme informatique spécifiquement dédié audit enregistrement et/ou spécifiquement dédié au type de donnée de ladite valeur à mettre à jour et/ou insérer.

Ainsi, il est possible de traiter plus efficacement les requêtes d'insertion et/ou de mise à jour de données au sein d'une base de données, en divisant efficacement les mises à jour en des opérations mutualisables.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention qui est définie par les revendications indépendantes attachées.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- [fig 1] la figure 1 décrit le principe général de l'invention ;
- [fig 2] la figure 2 décrit les différentes étapes du procédé dans un exemple de réalisation ;
- [fig 3] la figure 3 illustre succinctement un dispositif apte à mettre en œuvre le système de l'invention.

### 5. Description détaillée

### 5.1. Description d'un mode de réalisation

Comme explicité précédemment, un objet de l'invention est de permettre une optimisation de la répartition des actions résultant de la réception d'une requête comprenant une instruction d'insertion ou de mise à jour d'au moins une donnée représentative d'une quantité (par exemple une quantité de temps, une quantité d'eau, une quantité d'électricité, de bois, etc.) en fonction de données représentative des quantités existantes dans un ou plusieurs dépôts ou réceptacles au sein d'une base de données. La base de données en question n'est pas nécessairement une base de données relationnelle, et peut en fonction des modes de réalisation et des mises en œuvre opérationnelles prendre la forme de fichiers à plat, de registres d'une mémoire RAM ou de champs dans un fichier à plat ou effectivement de champs d'enregistrement de base de données. Pour ce faire, on met en œuvre deux techniques complémentaires : d'une part une technique de distribution, mise en œuvre par un composant distributeur, des données reçues dans les requêtes d'insertion ou de mise à jour de données (dites requêtes entrantes), éventuellement associé à un marquage opérationnel et d'autre part une technique d'équilibrage de la répartition de la quantité (à insérer ou à mettre à jour) au sein d'un ensemble d'enregistrements susceptibles d'accueillir une insertion/mise à jour de ladite valeur et d'application du marquage opérationnel lors de l'insertion/mise à jour. Une fois mise à jour ou insérée, la valeur est facultativement consommée ou comptabilisée, en fonction des modes de réalisation et de la mise en œuvre opérationnelle.

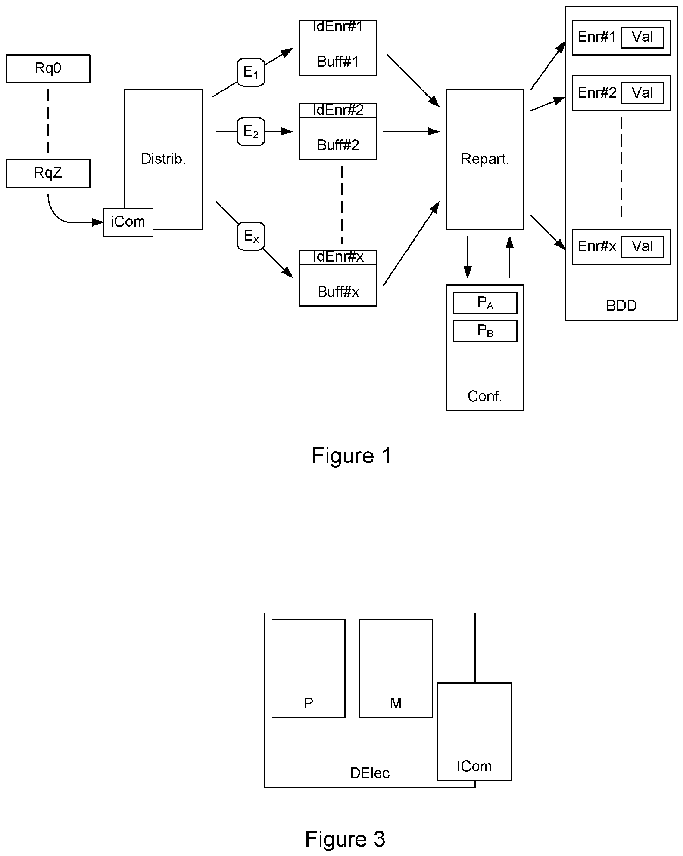

Le système est brièvement décrit en relation avec la figure 1 Il comprend deux composants principaux : le distributeur (Dsitrib.) et le répartiteur (Repart.). Le distributeur (Dsitrib.) reçoit, par l'intermédiaire d'une interface de communication (iCom), un ensemble de requêtes (RqO, ...RqZ) dont les objets sont l'insertion et/ou la mise à jour d'enregistrements (Enr#1, Enr#2, ..., Enr#x) au sein d'une base de données. Le distributeur (Dsitrib.) extrait des données (explicitées ci-dessous) de ces requêtes, et notamment un identifiant d'enregistrement (IdEnr#1, IdEnr#2, ...IdEnr#x) permettant de déterminer l'enregistrement (Enr#1, Enr#2, ..., Enr#x) au sein duquel doit être effectuée l'insertion et/ou la mise à jour. Le distributeur (Dsitrib.), à partir des données de la requête en cours de traitement, créé un enregistrement dit de buffer (E1, E2, ..., Ex) associé à l'identifiant d'enregistrement (IdEnr#1, IdEnr#2, ...IdEnr#x), et insère (E1, E2, ..., Ex) cet enregistrement de buffer dans le buffer (Buff#1, Buff#2, ..., Buff#x) associé à l'identifiant d'enregistrement (IdEnr#1, IdEnr#2, ...IdEnr#x). Il y a un buffer par identifiant d'enregistrement. Éventuellement, un horodatage est pratiqué. Un marquage opérationnel peut également être présent ou dynamiquement effectué à l'occasion de la création de l'enregistrement de buffer (E1, E2, ..., Ex). Le répartiteur (Repart.) pour sa part, est en charge de la mise à jour effective des données dans la base de données (BDD). Il traite les enregistrements de buffer (E1, E2, ..., Ex), selon une méthode de traitement dynamique (en série, en parallèle ou mixte, comme décrit ci-après) et utilise le marquage opérationnel des enregistrements de buffer (E1, E2, ..., Ex) pour obtenir, à partir d'un fichier de configuration (Conf.), et exécuter un programme (PA, PB, etc.) associé au type de données et/ou à la valeur de cette donnée dans l'enregistrement de buffer en cours de traitement. Les programmes (PA, PB, etc.) peuvent être des programmes définis par des configurateurs et/ou des utilisateurs, pour remplir des fonctions prédéfinies associées à la l'enregistrement ou au type de valeur traité. Ces programmes (PA, PB, etc.) peuvent ou non modifier la valeur (val) finalement mise à jour ou insérée dans les enregistrements de base de données (Enr#1, Enr#2, ..., Enr#x).

Ainsi un enregistrement de la base de données (BDD) comprend (au moins) une valeur à mettre à jour et que chaque buffer (Buff#1, Buff#2, ..., Buff#x) est associé à la mise à jour (cumulative ou programmatique) d'au moins une valeur, d'au moins un enregistrement de la base de données. Comme exposé, le distributeur distribue les insertions/mises à jour dans les buffers en fonction de critères de distribution des requêtes entrantes et il créé des enregistrements de buffer. Le répartiteur (Repart.) met à jour des données dans la base de données (BDD). Il traite les enregistrements de buffer (E1, E2, ..., Ex) de chacun des buffers, pour mettre à jour la base de données, soit en cumulant les mises à jour insérées dans les buffers, soit d'une autre manière, comme explicité par la suite.

Ainsi, à la différence des systèmes de l'art antérieur, il n'est pas nécessaire de faire appel à des systèmes d'intelligence artificielle pour pouvoir équilibrer les mises à jour de valeurs dans des réceptacles divers. Le système est par ailleurs scalable car il permet une répartition de charge optimale dans la mise à jour, en autorisant par exemple le cumul de mise à jour (lorsqu'il n'y a pas de marquage opérationnel) et la méthode de traitement mise en œuvre par le répartiteur (Repart.) peut être adaptée en temps réel, par exemple en fonction d'un niveau de charge estimé dans les buffers, par un ordonnanceur (non représenté).

Une requête entrante, reçue par le dispositif de traitement, comprend un certain nombre de champs, dont par exemple un ou plusieurs des champs suivants. La fonction de ces champs est identifiée en troisième colonne

**[Tableau 1]**

| | | |
|---|---|---|
| ID requête entrante | <Pmt0InfId> | Code interne d'identification. |
| Somme de contrôle | <Ctrl1Sum0> | Le système fournit le total de chacune des valeurs. |
| Priorité d'instruction | <Pmt2TpInf> | Priorité de traitement définie dans des options de traitement, permettant au distributeur de marquer une telle priorité à destination du répartiteur. |
| | <Instr3Prty> | |
| Date d'exécution | <Req4dExt> | Horodatage pour traitement horodaté. S'il est vide, l'horodatage est effectué par le distributeur. |
| Identifiant du transmetteur | <ld5> | Identification du transmetteur : permet de connaitre le dispositif d'origine |
| Unité de la valeur | <C6cy> | Unité dans laquelle la valeur est exprimée (e.g. litre, ampère, watt, force, quantité de mouvement, unité cumulable, consommable ou dépensable) |
| Valeur | <Val7> | Valeur : il s'agit de la quantité d'unité |
| Identification d'instruction | <Instr8Id> | Le système génère une clé unique pour chaque requête, incluant l'identifiant d'enregistrement, le transmetteur, la date d'exécution et un numéro de contrôle de vérification (non listé). |
| ID de l'enregistrement de base de données | <Cdtr9Acct> | Le système utilise un code d'enregistrement en base de données. Il s'agit de l'identifiant utilisé pour le buffer. |
| ID de base de données | <Id10> | Le système utilise un numéro d'identification de base, lorsque plusieurs bases de données sont présentes. |
| Code d'objet | <Purp11> | Le système utilise une valeur de motif de requête définie dans des options de traitement pour déterminer un éventuel code de motif. Dans le cas où l'un de ces champs est valorisé, il constitue le marquage opérationnel |
| | <Cd12> | |

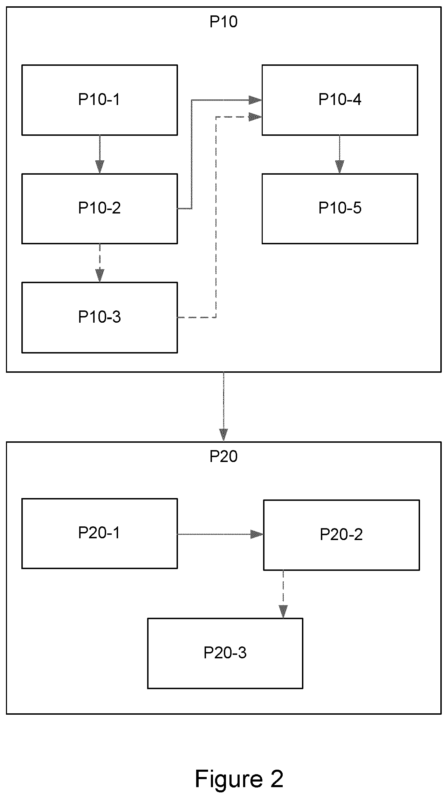

La figure 2 explicite les deux phases mises en œuvre :
- une phase de distribution (P10) de données, au sein d'une pluralité de buffers, chaque buffer étant associé à un enregistrement d'une base de données, l'association étant effectuée par l'intermédiaire d'un identifiant d'enregistrement de base de données présent au sein des requêtes d'insertion et/ou de modification reçues, lesdites données étant insérées sous la forme d'enregistrements de buffer, comprenant une valeur à mettre à jour et/ou insérer au sein de la base de données ; dans un exemple de réalisation la phase de distribution (P10) comprend :
   - Une étape d'extraction (P10-1), à partir de la requête d'insertion et/ou de modification courante, d'un identifiant d'enregistrement de base de données ;
   - Une étape de recherche (P10-2), au sein de la base de données, d'un enregistrement correspondant à l'identifiant d'enregistrement de base de données précédemment extrait, délivrant un identifiant de *buffer* ;
   - Lorsque la recherche est négative, une étape de création (P10-3), en mémoire, d'un *buffer* associé audit identifiant d'enregistrement ;
   - Une étape de création (P10-4) d'un enregistrement de buffer courant, comprenant la valeur à insérer ou à mettre à jour au sein de la base de données ; et
   - Une étape d'insertion (P10-5) de l'enregistrement de *buffer* courant précédemment créé au sein du *buffer* correspondant audit identifiant de buffer. Et
- une phase de répartition (P20), à partir des buffers de ladite pluralité de buffers, de données au sein des enregistrements de la base de données, ladite phase de répartition comprenant, pour les enregistrements de buffers qui comprennent un marquage opérationnel, l'exécution à partir d'un fichier de configuration, d'un programme informatique spécifiquement dédié audit enregistrement et/ou spécifiquement dédié au type de donnée de ladite valeur à mettre à jour et/ou insérer ; dans un exemple de réalisation, la phase de répartition (P20) comprend :
   - une étape de détermination (P20-1) d'un traitement à exécuter relativement à ladite valeur à mettre à jour et/ou insérer dudit enregistrement de buffer ; cette détermination est effectuée, par exemple, en fonction d'un marquage opérationnel (un indicateur) présent dans l'enregistrement de buffer ;et
   - une étape d'exécution (P20-2) dudit traitement déterminé à l'étape précédente ;
   - une étape de mise à jour (P20-3) dudit enregistrement au sein de la base de données en fonction de la valeur à mettre à jour et/ou insérer et en fonction du résultat d'exécution dudit traitement préalablement déterminé lorsqu'un tel traitement a été mis en œuvre et qu'il a délivré un résultat en ce sens.

L'avantage de procéder de cette manière est qu'il y a un effet synergique entre la distribution et la mise à jour effective. En effet, comme chaque buffer est associé à un enregistrement d'une base de données, et que l'association est effectuée par l'intermédiaire d'un identifiant d'enregistrement de base de données présent au sein des requêtes d'insertion et/ ou de modification reçue, la phase de répartition (pour les enregistrements de buffers qui comprennent un marquage opérationnel pour lesquels l'exécution à partir d'un fichier de configuration, d'un programme informatique spécifiquement dédié audit enregistrement et/ ou spécifiquement dédié au type de donnée de ladite valeur à mettre à jour et/ ou insérer) est facilité et regroupé au sein d'un même buffer : il faut et il suffit pour accélérer le traitement, au sein d'un même buffer, regrouper les enregistrements qui sont exempts de marquage opérationnel pour effectuer une mise à jour cumulative à partir de ces enregistrements de buffer et s'il reste des enregistrements avec marquage opérationnel, traiter ces enregistrements par la suite, en effectuant les opérations nécessaires (i.e. exécution d'un programme informatique). Ainsi, on optimise le traitement des buffers.

Ainsi, d'une manière générale, la technique de l'invention comprend deux volets, complémentaires. Le premier volet consiste à effectuer une distribution, par le distributeur, des données reçues en provenance des requêtes entrantes : cette distribution dépend essentiellement de l'identification, ou non, d'un enregistrement de base de données (et éventuellement d'une base de données) susceptible d'être associé à la requête entrante. Lorsqu'un enregistrement de base de données peut être associé à une requête entrante (par exemple parce que la requête entrante comprend un identifiant de l'enregistrement de base de données), alors des données dites utiles de cette requête entrante sont insérées, par le distributeur, dans un buffer associé à cet enregistrement de base de données. Lorsqu'aucun enregistrement de base de données ne peut être associé à une requête entrante (par exemple parce que l'identifiant de la requête entrante ne correspond pas à -ou que la requête ne comprend pas- un identifiant de l'enregistrement de base de données), alors un buffer associé à l'identifiant de la requête est créé, par le distributeur, et les données utiles de la requête entrante sont alors insérées dans ce buffer ; les données insérées dans les buffers sont optionnellement horodatées (par exemple lorsqu'un tel horodatage n'existe pas déjà dans la requête).

Un marquage opérationnel de la requête entrante permet, en outre, de catégoriser la valeur contenue dans la requête entrante et qui doit faire l'objet d'une insertion ou d'une mise à jour dans l'enregistrement. Plus particulièrement, ce marquage opérationnel peut être effectué en amont (c'est-à-dire au moment de l'élaboration de la requête par l'expéditeur de celui-ci) ou bien dynamiquement, en fonction des paramètres d'exécution associés au processus de distribution des données. Ainsi, par exemple, lorsqu'une valeur, pour un type donné, se situe dans une plage de valeur prédéterminée, alors le processus de distribution (le distributeur) peut effectuer, de lui-même, le marquage opérationnel de cette valeur. Ainsi, le marquage opérationnel peut être mis en œuvre de manière dynamique ou bien de manière statique (le marquage statique étant présent dans la requête à réception de celle-ci dans le système, et résultant d'une opération de marquage réalisée antérieurement à la réception de la requête dans le système, comme indiqué dans les champs de la requête précédente). Le marquage dynamique comprend une étape de recherche, au sein d'un fichier de configuration (ou d'une base de données), d'une éventuelle donnée de marquage opérationnel par défaut à insérer, par exemple en fonction du type de valeur (entier, réel, double précision, chaine de caractère) et/ou de la valeur elle-même (par exemple si la valeur excède un certain plafond, se trouve entre deux valeurs prédéterminées, se situe en deçà d'un seuil donné, etc.) et/ou de l'unité de la valeur (Ampère, Watt, Litre, toute unité comptabilisation ou comptable). Il est utilisé pour permettre au système d'effectuer un traitement spécifique sur la valeur contenue dans l'enregistrement, éventuellement en lien avec des enregistrements connexes de l'enregistrement auquel la valeur est destinée. En d'autres termes, selon l'invention, le marquage opérationnel est un moyen de forcer l'exécution d'une opération d'équilibrage de valeur, éventuellement en utilisant les valeurs contenues dans des enregistrements connexes ou dépendants de l'enregistrement au sein duquel la valeur contenue dans la requête entrante doit être insérée ou mise à jour. Selon l'invention, un enregistrement connexe est par exemple un enregistrement de la base de données qui est lié à l'enregistrement courant. Le lien qui existe entre l'enregistrement connexe et l'enregistrement courant peut être d'une nature quelconque : par exemple par une relation de dépendance, une relation de débordement - i.e. quand un enregistrement est plein, on déverse dans un autre enregistrement, une relation d'ascendance - i.e. traitement de l'enregistrement connexe en priorité avant l'enregistrement courant.

Ainsi, à titre d'exemple de marquage dynamique, une requête entrante comprend une valeur v1 d'intensité électrique (mesurée en Ampère) associée à un enregistrement X compris dans un fichier de configuration d'intensité électrique d'un dispositif (ce fichier de configuration étant la base de données). Le distributeur de données identifie que la valeur se rapporte à une valeur d'intensité électrique ; il recherche au sein d'un fichier de configuration, si une règle de marquage opérationnel se rapporte aux données de type intensité électrique. Lorsqu'au moins une telle règle est présente, le distributeur de données effectue une comparaison de la valeur d'intensité électrique avec la (ou les) règles en question et effectue un marquage opérationnel dynamique si le résultat d'une de ces règles est positif. La donnée représentative du marquage est fonction de la (ou des règles) en question. Par exemple, le marquage peut être différent en fonction de la valeur v1. Par exemple, si v1 excède 2A, le marquage peut être de type #M1, tandis que si la valeur de l'intensité est comprise entre 1,5A et 2A, le marquage peut être de type #M2. D'une manière générale, on note que le distributeur de données n'est pas informé de la signification du marquage qu'il effectue. Il dispose uniquement d'une indication de marquage qu'il transcrit en fonction de tests et de valeurs de référence présente dans une base de configuration. De plus, le marquage peut être automatique, quelle que soit la valeur, c'est-à-dire que le marquage n'est pas corrélé à la mise en œuvre d'un test sur la valeur (marquage lié par exemple au type, à l'unité ou toute autre considération).

Lorsque la requête entrante est déjà marquée (i.e. le marquage a été effectué par l'expéditeur de la requête entrante), un champ spécifique de la requête entrante comprend l'indication de marquage opérationnel, comme explicité précédemment. Dans ce cas, le distributeur peut contrôler que le marquage est correct, ou bien ne rien faire et se contenter de retranscrire le marquage effectué. L'ordonnanceur peut être informé de ce marquage (sous la forme d'un compteur ou d'un pourcentage des requêtes marquées), par exemple pour la gestion de la charge (équilibrage de la répartition faite par le répartiteur) ou pour gérer la scalabilité du système.

En fonction des modes de réalisation, la requête entrante est insérée dans un message, le message étant reçu par l'interface de communication du dispositif électronique. Un message peut comprendre plusieurs requêtes entrantes, en provenance du même expéditeur. Chaque requête entrante du message peut se rapporter à des enregistrements de base de données différents. Un message comprend typiquement les informations suivantes :

**[Tableau 2]**

| | |
|---|---|
| Identification de message | <Msgld> |
| Date et heure de création | <CreDtTm> |
| Nombre de requêtes entrantes | <NbOfTxs> |
| Somme de contrôle | <CtrISum> |
| Identifiant de l'émetteur | <Id> |

Ce qui vient d'être décrit pour une intensité électrique est également valable pour d'autres types de données quantitatives, telles que décrit précédemment.

Ces buffers sont ensuite traités par un autre composant, dit répartiteur, en charge notamment de la répartition et de l'équilibrage des valeurs, qui constitue le deuxième volet de la technique de l'invention.

Plus particulièrement, le répartiteur (ou composant de répartition) est en charge de la mise à jour effective de la base de données, à partir des buffers d'enregistrements précédemment valorisés et/ou créés par le composant de distribution (distributeur). Le mode de fonctionnement du répartiteur peut être en série, en parallèle ou mixte et peut être modifié dynamiquement en fonction de la charge globale du système, mesurée par l'ordonnanceur (i.e. nombre d'enregistrements en attente dans les buffers, pourcentage d'enregistrements ayant un marquage opérationnel, nombre de requêtes entrantes sur le distributeur). L'ordonnanceur a donc la charge de la mesure de l'adaptation des traitements réalisés aux conditions subies ou rencontrées par le système. Il gère notamment le mode de fonctionnement du répartiteur, et les opérations réalisées par le répartiteur. Il est également en mesure de gérer le marquage dynamique des requêtes entrantes, au besoin, toujours dans un objectif de stabilité du système.

Le principe de fonctionnement est le suivant : pour un buffer donné, associé à un enregistrement de base de données, le répartiteur exécute les actions pour la mise à jour de la valeur ou à la création de l'enregistrement (et à l'insertion de la valeur dans l'enregistrement créé).

Ainsi, pour chaque buffer, le répartiteur effectue les opérations suivantes :
- Optionnellement, une concaténation (somme) de tout ou partie des valeurs du *buffer,* permettant d'obtenir une valeur finale ; La valeur finale peut être positive, négative ou égale à zéro : la valeur finale peut être directement utilisée pour mettre à jour la valeur de l'enregistrement en base de données, sans effectuer les opérations unitaires correspondant à chaque enregistrement du *buffer* ; par exemple, si l'unité de la valeur est le « Watt », le litre, le kilogramme ou toute autre unité de comptabilisation ou d'accumulation, et que la valeur finale est « *-50* », il est possible d'ajouter cette valeur directement à l'enregistrement identifié par le buffer ; une telle opération peut être réalisée par exemple uniquement sur les valeurs de buffer dont les enregistrements ne comprennent pas de marquage opérationnel ; Cette étape optionnelle est réservée à certaines situations ou une telle mise à jour peut être réalisée sans contraintes opérationnelles ;
- une itération, comprenant pour chaque enregistrement du buffer :
   - une étape de vérification de la présence d'un marqueur opérationnel associé audit enregistrement de buffer ; et
   lorsqu'un marqueur opérationnel est présent :
   - une étape de détermination d'un traitement à exécuter relativement à ladite valeur dudit enregistrement de buffer ; et
   - une étape d'exécution dudit traitement préalablement déterminé.

Le traitement à exécuter est déterminé en recherchant au sein d'un fichier de configuration, un traitement spécifique associé à un identifiant de marquage opérationnel. Il peut s'agir d'un traitement de répartition effectué à partir de la valeur de l'enregistrement dans le buffer. Par exemple, le marquage opérationnel référence, au sein du fichier de configuration, un programme informatique à exécuter, prenant en entrée la valeur de l'enregistrement du buffer. Ce programme informatique peut se présenter sous la forme d'un code scripté, d'un pseudocode pour machine virtuelle ou d'un code compilé, adaptés à être exécutés sur le dispositif qui effectue le traitement. Le programme informatique est prédéfini, par un utilisateur ou par un configurateur pour effectuer un certain nombre de tâches précises en fonction principalement de la valeur de l'enregistrement du buffer. Une telle modularité permet de réaliser aisément de nouveaux traitements sur les données entrantes sans qu'il soit nécessaire de modifier intégralement une chaine de traitement. Les traitements réalisables peuvent être de tout type. Principalement, ces traitements ont pour objectif d'équilibrer ou de répartir des « réservoirs », en fonction de la valeur de l'enregistrement et éventuellement d'autres informations liées à la requête entrante. Par exemple, lorsque la valeur entrante se rapporte à un nombre de pas à effectuer sur un actionneur (de type moteur pas à pas), le traitement peut consister à vérifier que le nombre de pas de la valeur n'excède pas un nombre de pas prédéterminé et si c'est le cas à répartir le nombre de pas entre l'actionneur désigné et un autre actionneur préalablement identifié par un autre enregistrement dans la base de données. Ce type de traitement est utile en ce qu'il permet d'éviter des problématiques de dépassement de capacité qui peuvent être induit par la réception de requête non nécessairement « *adpatées »* aux capacités (matérielles, logicielles, ou de toute autre nature) du réceptacle. On offre ainsi une certaine scalabilité au système : on peut gérer des montées en charge ou des changements d'échelle des valeurs reçues, et destinées à être insérées ou mise à jour en base de données en ne modifiant que des programmes informatiques spécifiques adaptés à un enregistrement donné (et donc à une fonctionnalité donnée).

Dans une autre configuration, la technique décrite permet d'affecter des valeurs monétaires à différents compte comptables de manière simple et efficace, y inclus en haute fréquence.

Un autre exemple, dans le domaine « logistique », est de gérer la capacité d'un centre de stockage. Si l'enregistrement se rapporte à un volume de palettes à stocker dans une première section du centre de stockage, le traitement automatisé peut consister à identifier une capacité maximum de cette première section, puis à déterminer si la valeur va avoir pour conséquence le dépassement de cette capacité ; et si tel est le cas, identifier une deuxième section du centre de stockage (i.e. un nouvel enregistrement de base de données de même type), effectuer une différence entre la valeur d'origine et la capacité maximum de la première section, délivrant une « valeur différentielle » et générer, dans un buffer associé à la deuxième section (un buffer associé à cet enregistrement de base de donnée), un nouvel enregistrement de buffer comprenant cette valeur différentielle et un marquage opérationnel (qui est du même type que celui associé à la première section du centre de stockage) afin qu'un traitement similaire puisse être effectué.

D'une manière générale, l'horodatage effectué sur les enregistrements de buffer nouvellement ajoutés par un traitement exécuté par le répartiteur est identique à l'horodatage de l'enregistrement de buffer initial. Cela permet d'assurer que toutes les opérations de traitement qui sont effectuées soient exécutées selon leur ordre d'arrivée. Cet ordonnancement, qui est préservé par la technique décrite, est important à deux titres :
- en premier lieu, il assure que les valeurs sont mises à jour de façon cohérentes par rapport à la réception des requêtes au sein du système ;
- en deuxième lieu, il assure une progressivité de la mise à jour et des mises en œuvre des traitements de répartitions associés aux différents marquages opérationnels.

D'une manière générale, trois possibilités sont offertes pour le traitement des buffers, essentiellement en fonction du système opérationnel : série, parallèle ou mixte.

Une première possibilité consiste à traiter les buffers les uns après les autres. Les buffers sont alors ordonnancés (essentiellement, un paramètre d'ordonnancement permet de déterminer quel sera l'ordre de traitement des buffers). Le répartiteur prend alors en entrée le buffer dont le traitement est à effectuer en fonction de son ordre et gère l'intégralité de ce buffer, selon le mécanisme décrit précédemment. Lorsque le traitement du buffer courant est terminé, le processus passe au buffer suivant. Comme indiqué précédemment, lorsque les données sont horodatées au sein du buffer, les enregistrements du buffer sont traités selon cet horodatage. Optionnellement, lorsque la date et/ou l'heure de l'enregistrement du buffer est supérieure à la date et/ou l'heure courante, l'enregistrement n'est *pas* traité. Il le sera lorsque la date et/ou l'heure courante sera supérieure ou égale à lorsque la date et/ou l'heure de l'enregistrement du buffer. Cela permet de recevoir, en avance, des ajouts ou des mises à jour à réaliser sans qu'elles le soient immédiatement, et donc de résoudre certains problèmes liés à des possibles congestions de réseaux ou éventuels problèmes de transmission ou anticipations de mise à jour par exemple.

Une deuxième possibilité consiste à traiter les enregistrements des buffers les uns après les autres, sans tenir compte du buffer auxquels ils appartiennent. Le répartiteur prend alors en entrée l'enregistrement de buffer dont la date et/ou l'heure est la plus ancienne et effectue la mise à jour et/ou l'ajout associé à ce buffer, éventuellement en y adjoignant un traitement en cas de marquage opérationnel. Dans ce cas de figure, on traite donc tous les buffers en parallèle, alors que dans la première possibilité, on traite les buffers en série. Cette deuxième possibilité est plus orientée temps réel et permet d'assurer une mise à jour concurrentielle d'enregistrement de base de données, particulièrement lorsque la fréquence de réception de requêtes de mise à jour est importante et que de nombreux enregistrements sont référencés. À l'inverse, le traitement en série des buffers permet d'assurer une efficacité de mise à jour d'enregistrement puisque l'état final d'un enregistrement de base de données est bien plus rapidement connu, ce qui n'est pas le cas de la deuxième possibilité de traitement qui implique le système atteint un état de stabilité (correspondant au traitement de l'ensemble des buffers et donc de l'ensemble des enregistrements de la base de données) beaucoup plus tardivement, l'état de stabilité du système étant obtenu lors du dernier tour de traitement des enregistrements de buffer.

Au final, la technique proposée permet d'assurer que les ajouts et mises à jour de valeurs soient réalisées de manière simple et efficaces tout en assurant une certaine résistance à l'erreur et un passage à l'échelle simple.

### 5.2. Description d'un exemple de réalisation

On décrit, dans cet exemple de réalisation, l'application de la technique précitée à la mise à jour d'une donnée d'actionnement ou d'activation au sein d'un dispositif électronique (Delec), par exemple de type robotisé. Plus particulièrement, en relation avec la figure 2, un tel dispositif comprend un processeur (P), une mémoire (M) et au moins une interface de communication (Icom). L'interface de communication (Icom) est en mesure de recevoir, en provenance d'un réseau de communication avec lequel le dispositif électronique (Delec) est connecté, une ou plusieurs requêtes de mises à jour, insertion de données, via l'intermédiaire de messages.

Comme explicité précédemment, une requête se présente sous la forme d'un message qui comprend une structure de données de requêtage. La structure de données de requêtage comprend un nombre prédéterminé de champs, dont un identifiant d'enregistrement. Au moins un de ces champs comprend une valeur à insérer ou à mettre à jour dans une base de données gérée au sein du dispositif électronique (Delec). La base de données comprend un certain nombre d'enregistrements, chaque enregistrement comprenant au moins un champ susceptible d'être mis à jour ou créée en fonction de valeurs issues de requêtes provenant d'un ou plusieurs autres dispositifs, par l'intermédiaire du réseau de communication.

Les enregistrements sont typés, tout comme la ou les données à mettre à jour, et les enregistrements comprennent un champ identifiant. Par exemple, un enregistrement peut se rapporter à un actuateur, et la valeur associée à cet actuateur peut être binaire (0 : actuateur non activé ; 1 : actuateur activé). Encore un autre exemple, un enregistrement peut se rapporter à une diode électroluminescente, et la valeur associée à cette diode peut être un entier compris entre 0 et 256, chaque valeur étant représentative d'une luminosité de la diode : 0 : diode éteinte ; 256 : éclairage maximum ; 128 : éclairage à mi-intensité. Dans cet exemple, également, des enregistrements peuvent se rapporter à des quantités de temps et/ou à des nombres de tours à réaliser par un servo moteur ou des nombres de tours (effectués par un moteur) à contrôler par une sonde de contrôle. Dans cet exemple, ainsi, chaque champ de la base de données se rapporte à au moins un élément du dispositif électronique en question.

Cette base de données peut dans cet exemple de réalisation prendre la forme d'un ensemble de registres, prédéterminés, du dispositif électronique, chaque registre étant destiné à participer au contrôle (activation, désactivation, modification de comportement) d'un ou de plusieurs éléments du dispositif électronique lui-même (voir d'un autre dispositif auquel le dispositif électronique est connecté). Quoi qu'il en soit, dans cet exemple, le procédé précédemment décrit est mis en œuvre pour effectuer d'une part une réception de la requête d'insertion ou de mise à jour, par l'intermédiaire d'un premier processus. Ce premier processus est mis en œuvre par le processeur, en temps réel, en utilisant un processus informatique de réception et de distribution des requêtes. Ce processus de distribution, met en œuvre le procédé de distribution (traitement et d'allocation), tel que décrit précédemment. Plus particulièrement dans cet exemple, le processus comprend, de manière permanente (i.e. au moins une itération des étapes) :
- Surveillance d'une réception, au niveau de l'interface de communication (Icom), de la réception d'une requête de mise à jour/insertion d'une donnée, appelée requête entrante ; et
Lorsqu'une requête est reçue sur l'interface de communication (ICOm) :
- Extraction, de ladite requête, d'un identifiant d'enregistrement ;
- Vérification, au sein de la base de données, de la présence d'un enregistrement comprenant ledit identifiant d'enregistrement extrait de ladite requête ;
- Lorsqu'il existe un enregistrement comprenant l'identifiant d'enregistrement, insertion des champs utiles de la requête entrante dans un buffer associé audit enregistrement, optionnellement accompagné d'un horodatage ;
- Lorsqu'il n'existe pas d'enregistrement comprenant l'identifiant d'enregistrement, création d'un associé audit enregistrement et insertion des champs utiles de la requête entrante dans ce buffer, optionnellement accompagné d'un horodatage.

Les champs utiles de la requête entrante sont de diverses natures. Dans cet exemple de réalisation, cependant, les champs suivants sont nécessairement présents :
- Origine de la requête entrante, par exemple identifiant d'un dispositif électronique de transmission de la requête entrante ou identifiant d'une entité ayant transmis la requête entrante ;
- Valeur à insérer/mettre à jour ;
- Unité de la valeur à insérer/mettre à jour ;
- Identifiant de l'enregistrement au sein duquel la valeur doit être insérée/mise à jour.

Optionnellement, la requête entrante peut également comprendre un champ de marquage opérationnel, tel que décrit précédemment. Le champ de marquage opérationnel est un champ permettant de traiter la valeur à insérer/mettre à jour selon une procédure spécifique, dont plusieurs exemples sont explicités par la suite.

Ainsi, de manière continue, l'interface de communication (ICOm) est surveillée par le processus de distribution. Lorsqu'une requête entrante est identifiée sur l'interface de communication (ICOm), le processus de distribution se charge de vérifier la validité de la requête entrante et de l'affecter à un buffer de destination, éventuellement avec un horodatage des données utiles de la requête. La requête en elle-même peut également faire l'objet d'une conservation dans un autre réceptacle de données, par exemple pour faire l'objet d'analyses et de traitement ultérieurs. On note par ailleurs que l'interface de communication peut être utilisée pour transmettre et recevoir d'autres données que des requêtes entrantes. Cette interface de communication peut notamment être utilisée pour transmettre et/ou recevoir des données de diagnostic par exemple, ou encore des relevés d'opérations réalisées.

Chaque buffer de destination est continuellement traité. Plus particulièrement, dans cet exemple de mise en œuvre, le processus de répartition (répartiteur) est également mis en œuvre en temps réel et en continu. Une telle mise en œuvre est adaptée au contexte et pourrait être différente dans d'autres contextes. Quoi qu'il en soit, le processus de répartition, comme décrit précédemment, dans cet exemple, traite les buffers en parallèle, essentiellement en fonction de l'horodatage des enregistrements de buffer. Cela signifie que les enregistrements des buffers sont tous traités en mêmes temps, en fonction de la date et/ou de l'heure qu'ils possèdent, comme explicité précédemment.

Ce qui est décrit ici dans le cadre d'un dispositif électronique de gestion de mouvements peut également être mis en œuvre dans tout autre type de système d'allocation et/ou de mise à jour de valeurs.

Pour chaque enregistrement de buffer, le processus suivant est exécuté :
- une étape de vérification de la présence d'un marqueur opérationnel associé audit enregistrement de buffer ; et
lorsqu'un marqueur opérationnel est présent :
- une étape de détermination d'un traitement à exécuter relativement à ladite valeur dudit enregistrement de buffer ; et
- une étape d'exécution dudit traitement déterminé à l'étape précédente, ledit traitement se présentant sous la forme d'un code machine exécutable ;
- une étape de mise à jour dudit enregistrement au sein de la base de données en fonction de la valeur à insérer/mettre à jour et en fonction du résultat d'exécution dudit traitement préalablement déterminé si un tel traitement à été mis en œuvre et qu'il a délivré un résultat en ce sens ;
- une étape de consommation de ladite valeur dudit enregistrement de base de données mis à jour ;

Dans l'exemple de réalisation, la consommation de la valeur de l'enregistrement consiste en une utilisation de celle-ci par l'actionneur ou le composant auquel l'enregistrement est associé. Par exemple, dans le cas d'un nombre de pas d'un moteur pas à pas, la consommation consiste en la mise en œuvre du moteur pas à pas pour le nombre de pas correspondant à la valeur de l'enregistrement. Dans le cas d'une valeur d'intensité électrique, le composant visé par l'enregistrement consomme la valeur en ajustant l'intensité électrique selon cette valeur. Dans le cas d'une puissance, la puissance est ajustée à la valeur indiquée.

### 5.3. Autres caractéristiques et avantages

On précise par ailleurs les caractéristiques suivantes. Les requêtes d'insertion modification comprennent une ou plusieurs données à insérer (ou modifier) dans un ou plusieurs champs d'un ou de plusieurs enregistrements. Le distributeur effectue une distribution de ces mises à jour/insertion en fonction des données et donc créé des buffers pour pouvoir mettre en pile (stacker) ces insertions/mises à jour. Ainsi, une requête peut contenir un ou plusieurs identifiants d'enregistrements. Dans la majorité des cas, cependant, la requête comprend un identifiant d'enregistrement. Par ailleurs, la distribution de données dans les buffers est essentiellement guidée par l'identifiant ou les identifiants d'enregistrements présents au sien de la requête : lorsque l'identifiant est déjà présent en base de données, le buffer, a priori, existe déjà et donc ce buffer est utilisé ; lorsque l'identifiant est absent en base de données, comme indiqué précédemment, un nouveau buffer est créé. Ainsi, une association est réalisée par le ou les identifiants présents au sein de la requête. Un enregistrement de buffer est créé pour chaque identifiant présent dans la requête (s'il y en a plusieurs) et l'enregistrement de buffer est inséré au sein de ce buffer, avec éventuellement l'ajout d'un marquage opérationnel (i.e. un indicateur) qui peut correspondre à un marquage présent ou un marquage dépendant de l'identifiant de l'enregistrement en base. Lors de la répartition, pour chaque buffer, les enregistrements de buffer peuvent être traités par lot ou unitairement, et lorsqu'un marquage opérationnel est présent, une vérification ou une obtention d'un fichier de configuration ou directement d'un programme est réalisée. Le fichier de configuration peut comprendre des instructions (paramètres) permettant l'exécution d'un programme paramétrable (i.e. le fichier de configuration comprenant les paramètres est chargé grâce à l'indicateur et le programme paramétrable utilise ce fichier pour s'exécuter). Soit, alors le programme effectue lui-même l'insertion/mise à jour en base et répartit les données, soit il effectue d'autres opérations et l'insertion mise à jour en base, au sein des enregistrements de la base de données, est effectuée par la suite. Quelle que soit la méthode employée, les mises à jour/insertion sont réalisées grâce à l'identifiant de l'enregistrement auquel le buffer d'enregistrement se rapporte.

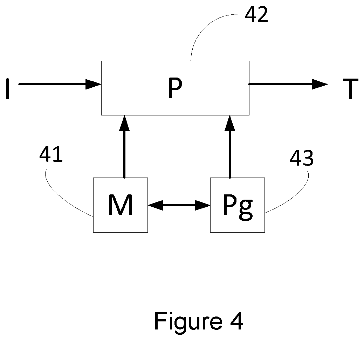

On présente, en relation avec la figure 4, une architecture simplifiée d'un dispositif électronique d'exécution apte à effectuer le traitement et l'exécution de code selon l'une au moins des procédés décris précédemment. Un dispositif électronique d'exécution comprend une mémoire 41 (et/ou éventuellement sécurisée et/ou deux mémoires séparées, une sécurisée et l'autre non), une unité de traitement 42 équipée par exemple d'un microprocesseur (et/ou éventuellement sécurisé et/ou deux processeurs séparés, un sécurisé et l'autre non), et pilotée par le programme d'ordinateur 43, mettant en œuvre tout ou partie des procédés tels que précédemment décrits. Dans au moins un mode de réalisation, l'invention est mise en œuvre au moins partiellement sous la forme d'un ensemble de composant logiciels et/ou matériels intégrés à ce dispositif, qui peut se présenter sous la forme d'un ou de deux serveurs connectés à un réseau de communication. On dispose ainsi d'un dispositif (ou d'un système en cas de pluralité de serveurs) de traitement de requêtes d'insertion et/ou de modifications de données, dispositif comprenant un processeur, une mémoire et une interface de communication destinée à recevoir lesdites requêtes en provenance d'un réseau de communication. Ce dispositif comprend des moyens de distribution de données, au sein d'une pluralité de buffers, dans la mémoire du dispositif (ou du système), chaque buffer étant associé à un enregistrement d'une base de données, l'association étant effectuée par l'intermédiaire d'un identifiant d'enregistrement de base de données présent au sein des requêtes d'insertion et/ou de modification reçues, lesdites données étant insérées sous la forme d'enregistrements de buffer comprenant une valeur à mettre à jour et/ou insérer au sein de la base de données ; et des moyens de répartition, à partir des buffers de ladite pluralité de buffer, de données au sein des enregistrements de la base de données, ces moyens de répartition comprenant, pour les enregistrements de buffer qui comprennent un marquage opérationnel, la des moyens d'exécution à partir d'un fichier de configuration, d'un programme informatique spécifiquement dédié audit enregistrement et/ou spécifiquement dédié au type de donnée de ladite valeur à mettre à jour et/ou insérer au sein de la base de données.

Pour l'exécution des fonctions qui lui sont confiés, le dispositif comprend également les moyens de mise en œuvre de l'ensemble des étapes précédemment mentionnées, soit sous une forme matérielle, lorsque des composants spécifiques sont dédiés à ces tâches, soit sous une forme logicielle en lien avec un ou plusieurs microprogrammes s'exécutant sur un ou plusieurs processeurs du dispositif d'exécution.

## Revendications

1. Procédé de traitement de requêtes (RqO, ...RqZ) d'insertion et/ou de modifications de données, procédé mis en œuvre par un dispositif électronique (DElec) de traitement, comprenant une interface de communication (iCom) destinée à recevoir lesdites requêtes (RqO, ...RqZ) en provenance d'un réseau de communication, procédé **caractérisé en ce qu'**il comprend une phase de distribution (P10) de données, au sein d'une pluralité de buffers (Buf#1, Buff#2, ..., Buf#x), chaque buffer (Buf#1, Buff#2, ..., Buf#x) étant associé à un unique enregistrement (Enr#1, Enr#2, ..., Enr#x) d'une base de données (BDD), l'association entre chaque buffer (Buf#1, Buff#2, ..., Buf#x) et chaque enregistrement (Enr#1, Enr#2, ..., Enr#x) étant effectuée par l'intermédiaire d'un identifiant d'enregistrement (IdEnr#1, IdEnr#2, ...IdEnr#x) au sein de la base de données (BDD), ces identifiants d'enregistrement (IdEnr#1, IdEnr#2, ...IdEnr#x) étant présents au sein des requêtes (RqO, ...RqZ) d'insertion et/ou de modification reçues, lesdites données étant insérées, à partir de valeurs contenues dans les requêtes (RqO, ...RqZ) d'insertion et/ou de modification, au sein de la pluralité de buffers (Buf#1, Buff#2, ..., Buf#x), sous la forme d'enregistrements de buffer (E1, E2, ..., Ex), comprenant une valeur (val) à mettre à jour et/ou insérer au sein de la base de données (BDD) ; et une phase de répartition (P20), à partir des buffers (Buf#1, Buff#2, ..., Buf#x) de ladite pluralité de buffers (Buf#1, Buff#2, ..., Buf#x), de données au sein des enregistrements (Enr#1, Enr#2, ..., Enr#x) de la base de données (BDD) auxquels ces buffers (Buf#1, Buff#2, ..., Buf#x) sont associés, ladite phase de répartition comprenant, pour les enregistrements de buffers (E1, E2, ..., Ex) qui comprennent un marquage opérationnel définissant un traitement à effectuer, l'exécution à partir d'un fichier de configuration, d'un programme informatique (PA, PB, etc.) spécifiquement dédié audit enregistrement et/ou spécifiquement dédié au type de donnée de ladite valeur (val) à mettre à jour et/ou insérer.

2. Procédé selon la revendication 1 **caractérisé en ce que** ladite phase de distribution (P10) de données comprend, pour une requête (RqO, ...RqZ) d'insertion et/ou de modification courante reçue par l'interface de communication (iCom) :
- Une étape d'extraction (P10-1), à partir de la requête (RqO, ...RqZ) d'insertion et/ou de modification courante, d'un identifiant d'enregistrement (IdEnr#1, IdEnr#2, ...IdEnr#x) de base de données ;
- Une étape de recherche (P10-2), au sein de la base de données (BDD), d'un enregistrement (Enr#1, Enr#2, ..., Enr#x) correspondant à l'identifiant d'enregistrement (IdEnr#1, IdEnr#2, ...IdEnr#x) de base de données précédemment extrait, délivrant un identifiant de buffer ;
- Lorsque la recherche est négative, une étape de création (P10-3), en mémoire (M), d'un buffer (Buf#1, Buff#2, ..., Buf#x) associé audit identifiant d'enregistrement (IdEnr#1, IdEnr#2, ...IdEnr#x) ;
- Une étape de création (P10-4) d'un enregistrement de buffer (E1, E2, ..., Ex) courant, comprenant la valeur (val) à insérer ou à mettre à jour au sein de la base de données (BDD) ; et
- Une étape d'insertion (P10-5) de l'enregistrement de buffer (E1, E2, ..., Ex) courant précédemment créé au sein du buffer (Buf#1, Buff#2, ..., Buf#x) correspondant audit identifiant de buffer.

3. Procédé selon la revendication 2 **caractérisé en ce que** ladite étape de création de l'enregistrement de buffer (E1, E2, ..., Ex) comprend :
- Une étape de recherche, au sein de la requête (RqO, ...RqZ) d'insertion et/ou de modification courante, d'une donnée représentative d'un marquage opérationnel ;
- Lorsqu'une donnée représentative d'un marquage opérationnel est trouvée, une étape de copie de cette donnée au sein d'un champ marqueur de l'enregistrement de buffer (E1, E2, ..., Ex) courant ;
- Lorsqu'une donnée représentative d'un marquage opérationnel n'est pas trouvée, une étape de recherche, au sein d'un fichier de configuration, d'une éventuelle donnée de marquage opérationnel par défaut à insérer ;
- Lorsqu'une donnée représentative d'un marquage opérationnel par défaut est trouvée, une étape de copie de cette donnée au sein du champ marqueur de l'enregistrement de buffer (E1, E2, ..., Ex) courant.

4. Procédé selon la revendication 2 **caractérisé en ce que** ladite étape de création de l'enregistrement de buffer (E1, E2, ..., Ex) comprend :
- Une étape de recherche, au sein de la requête (RqO, ...RqZ) d'insertion et/ou de modification courante, d'une donnée représentative d'un horodatage ;
- Lorsqu'une donnée représentative d'un horodatage est trouvée, une étape de copie de cette donnée au sein d'un champ date de l'enregistrement de buffer (E1, E2, ..., Ex) courant ;
- Lorsqu'une donnée représentative d'un horodatage n'est pas trouvée, une étape d'insertion d'une données représentant la date et/ou l'heure courant au sein du champ date de l'enregistrement de buffer (E1, E2, ..., Ex) courant.

5. Procédé selon la revendication 1 **caractérisé en ce que** ladite phase de répartition (P20) comprend, pour un enregistrement de buffer (E1, E2, ..., Ex) courant d'un buffer (Buf#1, Buff#2, ..., Buf#x) courant de la pluralité de buffer (Buf#1, Buff#2, ..., Buf#x) :
- une étape de détermination (P20-1) d'un traitement à exécuter relativement à ladite valeur (val) à mettre à jour et/ou insérer dudit enregistrement de buffer (E1, E2, ..., Ex) ; et
- une étape d'exécution (P20-2) dudit traitement déterminé à l'étape précédente ;
- une étape de mise à jour (P20-3) dudit enregistrement (Enr#1, Enr#2, ..., Enr#x) au sein de la base de données (BDD) en fonction de la valeur (val) à mettre à jour et/ou insérer et en fonction du résultat d'exécution dudit traitement préalablement déterminé lorsqu'un tel traitement a été mis en œuvre et qu'il a délivré un résultat en ce sens ;

6. Procédé de traitement selon la revendication 5, **caractérisé en ce que** l'étape d'exécution dudit traitement comprend :
- une étape de détermination, au sein de la base de données (BDD), d'un enregistrement connexe audit enregistrement (Enr#1, Enr#2, ..., Enr#x) identifié par l'identifiant d'enregistrement (IdEnr#1, IdEnr#2, ...IdEnr#x) de base de données (BDD), au sein duquel une partie calculée de la valeur (val) à mettre à jour et/ou insérer peut être insérée et/ou mise à jour ;
- une étape de création, au sein d'un buffer (Buf#1, Buff#2, ..., Buf#x) associé audit enregistrement de base de données connexe, d'un enregistrement de buffer (E1, E2, ..., Ex), basé sur l'enregistrement de buffer (E1, E2, ..., Ex) courant, et comprenant ladite partie calculée de la valeur (val) à mettre à jour et/ou insérer.

7. Procédé de traitement selon la revendication 1, **caractérisé en ce que** ladite phase de répartition est mise en œuvre en série, de sorte que tous les enregistrements (E1, E2, ..., Ex) d'un buffer (Buf#1, Buff#2, ..., Buf#x) courant sont traités avant de traiter les enregistrements (E1, E2, ..., Ex) du buffer (Buf#1, Buff#2, ..., Buf#x) suivant.

8. Procédé de traitement selon la revendication 1, **caractérisé en ce que** ladite phase de répartition est mise en œuvre en parallèle, de sorte que les enregistrements (E1, E2, ..., Ex) de tous les buffers (Buf#1, Buff#2, ..., Buf#x) sont traités en fonction d'une donnée d'horodatage associé à chaque enregistrement de buffer (E1, E2, ..., Ex), en traitant en premier l'enregistrement (E1, E2, ..., Ex) dont la date et/ou l'heure est la plus ancienne par rapport à la date et/ou l'heure de tous les enregistrements de buffers (E1, E2, ..., Ex) de tous les buffers (Buf#1, Buff#2, ..., Buf#x).

9. Dispositif (DElec) de traitement de requêtes (RqO, ...RqZ) d'insertion et/ou de modifications de données, dispositif (DElec) comprenant un processeur (P), une mémoire (M) et une interface de communication (iCom) destinée à recevoir lesdites requêtes (RqO, ...RqZ) en provenance d'un réseau de communication, dispositif (DElec) **caractérisé en ce qu'**il comprend des moyens de distribution de données (Distrib.), au sein d'une pluralité de buffers (Buf#1, Buff#2, ..., Buf#x), chaque buffer (Buf#1, Buff#2, ..., Buf#x) étant associé à un unique enregistrement (Enr#1, Enr#2, ..., Enr#x) d'une base de données (BDD), l'association entre chaque buffer (Buf#1, Buff#2, ..., Buf#x) et chaque enregistrement (Enr#1, Enr#2, ..., Enr#x) étant effectuée par l'intermédiaire d'un identifiant d'enregistrement (IdEnr#1, IdEnr#2, ...IdEnr#x) au sein de la base de données (BDD), ces identifiants d'enregistrement (IdEnr#1, IdEnr#2, ...IdEnr#x) étant présents au sein des requêtes (RqO, ...RqZ) d'insertion et/ou de modification reçues, lesdites données étant insérées, à partir de valeurs contenues dans les requêtes (RqO, ...RqZ) d'insertion et/ou de modification, au sein de la pluralité de buffers (Buf#1, Buff#2, ..., Buf#x), sous la forme d'enregistrements de buffer (E1, E2, ..., Ex) comprenant une valeur (val) à mettre à jour et/ou insérer au sein de la base de données (BDD) ; et des moyens de répartition (Repart.), à partir des buffers (Buf#1, Buff#2, ..., Buf#x) de ladite pluralité de buffer (Buf#1, Buff#2, ..., Buf#x), de données au sein des enregistrements (Enr#1, Enr#2, ..., Enr#x) de la base de données (BDD) auxquels ces buffers (Buf#1, Buff#2, ..., Buf#x) sont associés, ladite phase de répartition comprenant, pour les enregistrements de buffer (E1, E2, ..., Ex) qui comprennent un marquage opérationnel définissant un traitement à exécuter, l'exécution à partir d'un fichier de configuration, d'un programme informatique (PA, PB, etc.) spécifiquement dédié audit enregistrement et/ou spécifiquement dédié au type de donnée de ladite valeur (val) à mettre à jour et/ou insérer au sein de la base de données (BDD).

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Verfahren zur Verarbeitung von Daten-Einfügungs- und/oder - Änderungsanforderungen (RqO, ... RqZ), wobei das Verfahren von einer elektronischen Verarbeitungsvorrichtung (DElec) ausgeführt wird, die eine Kommunikationsschnittstelle (iCom) zum Empfangen der Anforderungen (RqO, ... RqZ) aus einem Kommunikationsnetz, wobei das Verfahren **dadurch gekennzeichnet ist, dass** es eine Datenverteilungsphase (P10) umfasst, in der mehrere Puffer (Buf#1, Buff#2, ..., Buf#x) vorgesehen sind, wobei jeder Puffer (Buf#1, Buff#2, ...., Buf#x) einem einzelnen Datensatz (Enr#1, Enr#2, ..., Enr#x) einer Datenbank (BDD) zugeordnet ist, wobei die Zuordnung zwischen jedem Puffer (Buf#1, Buff#2, ..., Buf#x) und jedem Datensatz (Enr#1, Enr#2, ..., Enr#x) erfolgt über eine Datensatzkennung (IdEnr#1, IdEnr#2, ...IdEnr#x) innerhalb der Datenbank (BDD), wobei diese Datensatzkennungen (IdEnr#1, IdEnr#2, ...IdEnr#x) sind in den empfangenen Einfüge- und/oder Änderungsanforderungen (RqO, ...RqZ) vorhanden, wobei die Daten aus den in den Einfüge- und/oder Änderungsanforderungen (RqO, ...RqZ) enthaltenen Werten in die mehreren Puffer (Buf#1, Buff#2, ..., Buf#x) in Form von Puffer-Datensätzen (E1, E2, ..., Ex) eingefügt, die einen Wert (val) enthalten, der in der Datenbank (BDD) aktualisiert und/oder eingefügt werden soll; und eine Verteilungsphase (P20), in der die Daten aus den Puffern (Buf#1, Buff#2, ..., Buf#x) der mehreren Puffer (Buf#1, Buff#2, ..., Buf#x) von Daten innerhalb der Datensätze (Enr#1, Enr#2, ..., Enr#x) der Datenbank (BDD), denen diese Puffer (Buf#1, Buff#2, ..., Buf#x) zugeordnet sind, wobei die Verteilungsphase für die Puffer-Datensätze (E1, E2, ..., Ex), die eine Betriebsmarkierung enthalten, die einen auszuführenden Prozess definiert, die Ausführung eines Computerprogramms (PA, PB usw.) aus einer Konfigurationsdatei umfasst, das speziell für den Datensatz und/oder speziell für den Datentyp des zu aktualisierenden und/oder einzufügenden Werts (val) vorgesehen ist.

2. Verfahren nach Anspruch 1, **dadurch gekennzeichnet, dass** die Datenverteilungsphase (P10) für eine aktuelle Einfügungs- und/oder Änderungsanforderung (RqO, ...RqZ), die von der Kommunikationsschnittstelle (iCom) empfangen wird, umfasst:
- einen Schritt zum Extrahieren (P10-1) eines Datenbankdatensatzkennzeichens (IdEnr#1, IdEnr#2, ...IdEnr#x) aus der aktuellen Einfügungs- und/oder Änderungsanforderung (RqO, ...RqZ);
- einen Schritt zum Suchen (P10-2) innerhalb der Datenbank (BDD) nach einem Datensatz (Enr#1, Enr#2, ..., Enr#x), der der zuvor extrahierten Datenbankdatensatzkennung (IdEnr#1, IdEnr#2, ...IdEnr#x) entspricht, und zum Liefern einer Pufferkennung;
- Wenn die Suche negativ ist, ein Schritt zum Erstellen (P10-3) eines Puffers (Buf#1, Buff#2, ..., Buf#x) im Speicher (M), der mit der Datensatzkennung (IdEnr#1, IdEnr#2, ...IdEnr#x) verknüpft ist;
- Ein Schritt zum Erstellen (P10-4) eines aktuellen Pufferdatensatzes (E1, E2, ..., Ex), der den Wert (val) enthält, der in die Datenbank (BDD) eingefügt oder aktualisiert werden soll; und
- einen Schritt zum Einfügen (P10-5) des zuvor erstellten aktuellen PufferDatensatzes (E1, E2, ..., Ex) in den Puffer (Buf#1, Buff#2, ..., Buf#x), der der PufferKennung entspricht.

3. Verfahren nach Anspruch 2, **dadurch gekennzeichnet, dass** der Schritt zum Erstellen des Pufferdatensatzes (E1, E2, ..., Ex) umfasst:
- einen Schritt zum Suchen innerhalb der aktuellen Einfügungs- und/oder Änderungsanforderung (RqO, ...RqZ) nach einem Datenelement, das eine Betriebsmarkierung repräsentiert;
- Wenn ein Datenelement gefunden wird, das eine Betriebsmarkierung darstellt, einen Schritt zum Kopieren dieser Daten in ein Markierungsfeld des aktuellen Pufferdatensatzes (E1, E2, ..., Ex);
- Wenn ein Datenelement, das eine Betriebsmarkierung darstellt, nicht gefunden wird, einen Schritt zum Suchen eines möglichen Standard-Betriebsmarkierungsdatenelements, das eingefügt werden soll, innerhalb einer Konfigurationsdatei;
- Wenn ein Datenelement gefunden wird, das eine Standard-Betriebskennzeichnung darstellt, wird dieses Datenelement in das Markierungsfeld des aktuellen Pufferdatensatzes (E1, E2, ..., Ex) kopiert.

4. Verfahren nach Anspruch 2, **dadurch gekennzeichnet, dass** der Schritt des Erstellens des Puffersatzes (E1, E2, ..., Ex) umfasst:
- einen Schritt zum Suchen innerhalb der aktuellen Einfügungs- und/oder Änderungsanforderung (RqO, ...RqZ) nach einem Datenelement, das für eine Zeitstempelung repräsentativ ist;
- Wenn ein Datenelement gefunden wird, das eine Zeitmarkierung darstellt, wird dieses Datenelement in ein Datumsfeld des aktuellen Puffersatzes (E1, E2, ..., Ex) kopiert;
- Wenn kein Datenelement gefunden wird, das eine Zeitstempelung repräsentiert, ein Schritt zum Einfügen eines Datenelements, das das aktuelle Datum und/oder die aktuelle Uhrzeit repräsentiert, in das Datumsfeld des aktuellen Puffersatzes (E1, E2, ..., Ex).

5. Verfahren nach Anspruch 1, **dadurch gekennzeichnet, dass** die Versandphase (P20) für einen aktuellen Puffer-Datensatz (E1, E2, ..., Ex) eines aktuellen Puffers (Buf#1, Buff#2, ..., Buf#x) der mehreren Puffer (Buf#1, Buff#2, ..., Buf#x) umfasst:
- einen Schritt zum Bestimmen (P20-1) der Verarbeitung, die in Bezug auf den Wert (val) auszuführen ist, der aus dem Puffer-Datensatz (E1, E2, ..., Ex) aktualisiert und/oder eingefügt werden soll; und
- einen Schritt zum Ausführen (P20-2) der im vorherigen Schritt bestimmten Verarbeitung;
- einen Schritt zum Aktualisieren (P20-3) des Datensatzes (Enr#1, Enr#2, ..., Enr#x) in der Datenbank (BDD) gemäß dem zu aktualisierenden und/oder einzufügenden Wert (val) und gemäß dem Ergebnis der Ausführung der zuvor bestimmten Verarbeitung, wenn eine solche Verarbeitung durchgeführt wurde und ein entsprechendes Ergebnis geliefert hat;

6. Verarbeitungsverfahren gemäß Anspruch 5, **dadurch gekennzeichnet, dass** der Schritt des Ausführens der Verarbeitung umfasst:
- einen Schritt zum Bestimmen eines Datensatzes innerhalb der Datenbank (BDD), der sich auf den Datensatz (Enr#1, Enr#2, ..., Enr#x) zu ermitteln, in den ein berechneter Teil des zu aktualisierenden und/oder einzufügenden Werts (val) eingefügt und/oder aktualisiert werden kann;
- einen Schritt zum Erstellen eines Pufferdatensatzes (E1, E2, Ex) innerhalb eines Puffers (Buf#1, Buff#2, ..., Buf#x), der dem zugehörigen Datenbankdatensatz zugeordnet ist, basierend auf dem aktuellen Pufferdatensatz (E1, E2, ..., Ex) und umfassend den berechneten Teil des zu aktualisierenden und/oder einzufügenden Werts (val).

7. Verarbeitungsverfahren nach Anspruch 1, **dadurch gekennzeichnet, dass** die Verteilungsphase seriell implementiert ist, so dass alle Datensätze (E1, E2, Ex) eines aktuellen Puffers (Buf#1, Buff#2, ..., Buf#x) verarbeitet werden, bevor die Datensätze (E1, E2, ..., Ex) des nächsten Puffers (Buf#1, Buff#2, ..., Buf#x) verarbeitet werden.

8. Verarbeitungsverfahren nach Anspruch 1, **dadurch gekennzeichnet, dass** die genannte Dispatching-Phase parallel implementiert ist, so dass die Datensätze (E1, E2, Ex) aller Puffer (Buf#1, Buff#2, ..., Buf#x) gemäß einem Zeitstempel verarbeitet werden, der jedem Pufferdatensatz (E1, E2, ..., Ex) verarbeitet werden, indem zuerst der Datensatz (E1, E2, ..., Ex) verarbeitet wird, dessen Datum und/oder Uhrzeit in Bezug auf das Datum und/oder die Uhrzeit aller Pufferdatensätze (E1, E2, ..., Ex) aller Puffer (Puff#1, Puff#2, ..., Puff#x) am ältesten ist.

9. Vorrichtung (DElec) zur Verarbeitung von Dateneinfügungs- und/oder - änderungsanforderungen (RqO, ...RqZ), wobei die Vorrichtung (DElec) einen Prozessor (P), einen Speicher (M) und eine Kommunikationsschnittstelle (iCom) zum Empfangen der Anforderungen (RqO, ...RqZ) aus einem Kommunikationsnetzwerk, wobei die Vorrichtung (DElec) **dadurch gekennzeichnet ist, dass** sie Mittel zum Verteilen von Daten (Distrib.) innerhalb einer Vielzahl von Puffern (Buf#1, Buff#2, ..., Buf#x) umfasst, wobei jeder Puffer (Buf#1, Buff#2, ...., Buf#x) einem einzelnen Datensatz (Enr#1, Enr#2, ..., Enr#x) einer Datenbank (BDD) zugeordnet ist, wobei die Zuordnung zwischen jedem Puffer (Buf#1, Buff#2, ..., Buf#x) und jedem Datensatz (Enr#1, Enr#2, ..., Enr#x) erfolgt über eine Datensatzkennung (IdEnr#1, IdEnr#2, ...IdEnr#x) innerhalb der Datenbank (BDD), wobei diese Datensatzkennungen (IdEnr#1, IdEnr#2, ...IdEnr#x) in den empfangenen Einfügungs- und/oder Änderungsanforderungen (RqO, ...RqZ) vorhanden sind, wobei die Daten aus den in den Einfügungs- und/oder Änderungsanforderungen (RqO, ...RqZ) enthaltenen Werten in die mehreren Puffer (Buf#1, Buff#2, ..., Buf#x) in Form von Puffer-Datensätzen (E1, E2, ..., Ex) einzufügen, die einen Wert (val) umfassen, der in der Datenbank (BDD) aktualisiert und/oder eingefügt werden soll; und Mittel zum Verteilen (Repart.) aus Puffern (Buf#1, Buff#2, ..., Buf#x) der mehreren Puffer (Buf#1, Buff#2, ..., Buf#x) von Daten innerhalb der Datensätze (Enr#1, Enr#2, ..., Enr#x) der Datenbank (BDD), denen diese Puffer (Buf#1, Buff#2, ..., Buf#x) zugeordnet sind, wobei die Verteilungsphase für die Puffer-Datensätze (E1, E2, ..., Ex), die eine Betriebsmarkierung enthalten, die einen auszuführenden Prozess definiert, die Ausführung eines Computerprogramms (PA, PB usw.) aus einer Konfigurationsdatei umfasst, das speziell für den Datensatz und/oder speziell für den Datentyp des Werts (val) vorgesehen ist, der in der Datenbank (BDD) aktualisiert und/oder eingefügt werden soll.

10. Ein Computerprogrammprodukt, das aus einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Programmcodeanweisungen für die Ausführung eines Prozesses gemäß Anspruch 1 umfasst, wenn es auf einem Computer ausgeführt wird.

## Claims

1. Method for processing data insertion and/or modification requests (RqO, ... RqZ), the method being implemented by an electronic processing device (DElec) comprising a communication interface (iCom) for receiving said requests (RqO, ... RqZ) from a communication network, the method being **characterized in that** it comprises a data distribution phase (P10), within a plurality of buffers (Buf#1, Buff#2, ..., Buf#x), each buffer (Buf#1, Buff#2, ...., Buf#x) being associated with a single record (Enr#1, Enr#2, ..., Enr#x) of a database (BDD), the association between each buffer (Buf#1, Buff#2, ..., Buf#x) and each record (Enr#1, Enr#2,..., Enr#x) being performed by via a record identifier (IdEnr#1, IdEnr#2, ...IdEnr#x) within the database (BDD), these record identifiers (IdEnr#1, IdEnr#2, ...IdEnr#x) being present within the received insertion and/or modification requests (RqO, ...RqZ), said data being inserted, from values contained in the insertion and/or modification requests (RqO, ...RqZ), into the plurality of buffers (Buf#1, Buff#2, ..., Buf#x), in the form of buffer records (E1, E2, ..., Ex), comprising a value (val) to be updated and/or inserted within the database (BDD); and a dispatching phase (P20), from the buffers (Buf#1, Buff#2, ..., Buf#x) of said plurality of buffers (Buf#1, Buff#2, ..., Buf#x), of data within the records (Enr#1, Enr#2, ..., Enr#x) of the database (BDD) with which these buffers (Buf#1, Buff#2, ..., Buf#x) are associated, said dispatching phase comprising, for the buffer records (E1, E2, ..., Ex) which comprise an operational marking defining a process to be performed, the execution from a configuration file, a computer program (PA, PB, etc.) specifically dedicated to said record and/or specifically dedicated to the data type of said value (val) to be updated and/or inserted.

2. Method according to claim 1, **characterized in that** said data distribution phase (P10) comprises, for a current insertion and/or modification request (RqO, ...RqZ) received by the communication interface (iCom):
- A step of extracting (P10-1), from the current insertion and/or modification request (RqO, ...RqZ), a database record identifier (IdEnr#1 , IdEnr#2, ...IdEnr#x);
- A step of searching (P10-2), within the database (BDD), for a record (Enr#1, Enr#2, ..., Enr#x) corresponding to the previously extracted database record identifier (IdEnr#1, IdEnr#2, ...IdEnr#x), delivering a buffer identifier;
- When the search is negative, a step of creating (P10-3), in memory (M), a buffer (Buf#1, Buff#2, ..., Buf#x) associated with said record identifier (IdEnr#1, IdEnr#2, ...IdEnr#x);
- A step of creating (P10-4) a current buffer record (E1, E2, ..., Ex), comprising the value (val) to be inserted or updated in the database (BDD); and
- An step of inserting (P10-5) the previously created current buffer record (E1, E2, ..., Ex) previously created within the buffer (Buf#1, Buff#2, ..., Buf#x) corresponding to said buffer identifier.

3. Method according to claim 2, **characterized in that** said step of creating the buffer record (E1, E2, ..., Ex) comprises:
- A step of searching, within the current insertion and/or modification request (RqO, ...RqZ), for a piece of data representative of an operational marking;
- When a piece of data representative of an operational marking is found, a step of copying this data within a marker field of the current buffer record (E1, E2,..., Ex);
- When a piece of data representative of an operational marking is not found, a step of searching, within a configuration file, for a possible default operational marking piece of data to be inserted;
- When a piece of data representative of a default operational marking is found, a step of copying this piece of data within the marker field of the current buffer record (E1, E2, ..., Ex).

4. Method according to claim 2, **characterized in that** said step of creating the buffer record (E1, E2, ..., Ex) comprises:
- A step of searching, within the current insertion and/or modification request (RqO, ...RqZ), for a piece of data data representative of time stamping;
- When a piece of data representative of time stamping is found, a step of copying this piece of data into a date field of the current buffer record (E1, E2, ..., Ex);
- When a piece of data data representing a time stamping is not found, a step of inserting a piece of data representative of the current date and/or time within the date field of the current buffer record (E1, E2, ..., Ex).

5. Method according to claim 1, **characterized in that** said dispatching phase (P20) comprises, for a current buffer record (E1, E2, ..., Ex) of a current buffer (Buf#1, Buff#2, ..., Buf#x) of the plurality of buffers (Buf#1, Buff#2, ..., Buf#x):
- a step of determining (P20-1) processing to be executed with respect to said value (val) to be updated and/or inserted from said buffer record (E1, E2, ..., Ex); and
- a step of executing (P20-2) said processing determined in the previous step;
- a step of updating (P20-3) said record (Enr#1, Enr#2, ..., Enr#x) within the database (BDD) according to the value (val) to be updated and/or inserted and according to the result of execution of said processing previously determined when such processing has been implemented and has delivered a result accordingly;

6. Processing method according to claim 5, **characterized in that** the step of executing said processing comprises:
- a step of determining, within the database (BDD), a record related to said record (Enr#1, Enr#2, ..., Enr#x) identified by the record identifier (IdEnr#1, IdEnr#2, ...IdEnr#x) of the database (BDD), within which a calculated part of the value (val) to be updated and/or inserted may be inserted and/or updated;
- a step of creating, within a buffer (Buf#1, Buff#2, ..., Buf#x) associated with said related database record, a buffer record (E1, E2, Ex), based on the current buffer record (E1, E2, ..., Ex), and comprising said calculated part of the value (val) to be updated and/or inserted.

7. Processing method according to claim 1, **characterized in that** said dispatching phase is implemented in series, so that all records (E1, E2, Ex) of a current buffer (Buf#1, Buff#2, ..., Buf#x) are processed before processing the records (E1, E2, ..., Ex) of the next buffer (Buf#1, Buff#2, ..., Buf#x).

8. Processing method according to claim 1, **characterized in that** the said dispatching phase is implemented in parallel, so that the records (E1, E2, Ex) of all the buffers (Buf#1, Buff#2, ..., Buf#x) are processed according to a time stamping piece of data associated with each buffer record (E1, E2, ..., Ex), by processing first the record (E1, E2, ..., Ex) whose date and/or time is the oldest with respect to the date and/or time of all buffer records (E1, E2, ..., Ex) of all buffers (Buf#1, Buff#2, ..., Buf#x).

9. Device (DElec) for processing data insertion and/or modification requests (RqO, ...RqZ), the device (DElec) comprising a processor (P), a memory (M) and a communication interface (iCom) for receiving said requests (RqO,...RqZ) from a communication network, the device (DElec) being **characterized in that** it comprises means for distributing data (Distrib.), within a plurality of buffers (Buf#1, Buff#2, ..., Buf#x), each buffer (Buf#1, Buff#2, ...., Buf#x) being associated with a single record (Enr#1, Enr#2, ..., Enr#x) of a database (BDD), the association between each buffer (Buf#1, Buff#2, ..., Buf#x) and each record (Enr#1, Enr#2, ..., Enr#x) being effected via a record identifier (IdEnr#1, IdEnr#2, ...IdEnr#x) within the database (BDD), these record identifiers (IdEnr#1, IdEnr#2, ...IdEnr#x) being present within the received insertion and/or modification requests (RqO, ...RqZ), said data being inserted, from values contained in the insertion and/or modification requests (RqO, ...RqZ), into the plurality of buffers (Buf#1, Buff#2, ..., Buf#x), in the form of buffer records (E1, E2, ..., Ex) comprising a value (val) to be updated and/or inserted within the database (BDD); and means for dispatching (Repart.), from buffers (Buf#1, Buff#2, ..., Buf#x) of said plurality of buffers (Buf#1, Buff#2, ..., Buf#x), of data within the records (Enr#1, Enr#2, ..., Enr#x) of the database (BDD) with which these buffers (Buf#1, Buff#2, ..., Buf#x) are associated, said dispatching phase comprising, for the buffer records (E1, E2, ..., Ex) which comprise an operational marking defining a process to be executed, executing from a configuration file, a computer program (PA, PB, etc.) specifically dedicated to said record and/or specifically dedicated to the data type of said value (val) to be updated and/or inserted within the database (BDD).

10. A computer program product downloadable from a communication network and/or stored on a computer-readable medium and/or executable by a microprocessor, **characterized in that** it comprises program code instructions for the execution of a process according to claim 1, when executed on a computer.
